Europäisches Patentamt

European Patent Office

Office européen des brevets

(11) Veröffentlichungsnummer: **0 057 913**
A2

(12) **EUROPÄISCHE PATENTANMELDUNG**

(21) Anmeldenummer: 82100795.2

(22) Anmeldetag: 04.02.82

(51) Int. Cl.³: **C 08 F 14/06**
C 08 F 2/20, C 08 F 259/04

(30) Priorität: 11.02.81 DE 3104818
07.01.82 DE 3200203

(43) Veröffentlichungstag der Anmeldung:
18.08.82 Patentblatt 82/33

(84) Benannte Vertragsstaaten:
BE DE FR GB IT NL

(71) Anmelder: HOECHST AKTIENGESELLSCHAFT
Postfach 80 03 20
D-6230 Frankfurt/Main 80(DE)

(72) Erfinder: Klippert, Heinz, Dr.
Hochfeilnstrasse 14
D-8261 Burgkirchen/Alz.(DE)

(72) Erfinder: Mielke, Ingolf, Dr.
Hochstaufenstrasse 16
D-8261 Burgkirchen/Alz.(DE)

(54) Verfahren zur Herstellung von Homo-, Co- oder Pfropfpolymerisaten des Vinylchlorids.

(57) Es wird ein neues Verfahren zur Herstellung von Vinyl-chlorid-Homo-, -Co- oder -Pfropfpolymerisaten in wäßriger Suspension in Gegenwart geringer Mengen gasförmigen Sauerstoffs, einer besonderen Suspendiermittel-kombination und weiterer üblicher Polymerisationshilfsstoffe beschrieben. Es werden hierbei mindestens drei wasser-lösliche Suspendiermittel eingesetzt, die sich in ihrer dynamischen Grenzflächenspannung, gemessen nach Traube, wie folgt unterscheiden:

Suspendiermittel A = 1,0 bis 6,0 mN/m,
Suspendiermittel B = 6,1 bis 16,0 mN/m und
Suspendiermittel C = 16,1 bis 29,0 mN/m.

Die so erzeugten Polymere zeichnen sich durch beson-ders hohe Schüttdichten, gute Entfernbarkeit der restlichen Monomeren, günstige Korngrößenverteilung, gute Warmmi-schbarkeit mit Weichmachern und gute Anfangsfarbe sowie leichte Verarbeitbarkeit bei der thermoplastischen Verarbei-tung aus. Auf Elastomere gepfropfte Polymerisate können mit hoher Extruderleistung zu Formkörpern mit guter Ober-fläche und hoher Schlagzähigkeit verarbeitet werden.

EP 0 057 913 A2

HOECHST AKTIENGESELLSCHAFT          HOE 81/F 900K        Dr.S-ei

Verfahren zur Herstellung von Homo-, Co- oder
Pfropfpolymerisaten des Vinylchlorids

Die Erfindung betrifft ein Verfahren zur Herstellung von Homo-, Co- oder Pfropfpolymerisaten, die 70 bis etwa 100 Gew.-% polymerisierte Vinylchlorid-Einheiten enthalten gemäß Patentanspruch 1.

Die Herstellung von Homopolymerisaten des Vinylchlorids oder Co- bzw. Pfropfpolymerisaten, die einen überwiegenden Anteil an polymerisierten Vinylchlorid-Einheiten enthalten, durch Suspensionspolymerisation in wäßriger Phase ist seit langem bekannt. Bei diesem Verfahren dispergiert man das monomere Vinylchlorid gegebenenfalls mit anderen mit Vinylchlorid copolymerisierbaren Monomeren und/oder mit Vinylchlorid pfropfpolymerisierbaren Polymeren durch Rühren in der wäßrigen Phase in Gegenwart von einem oder mehreren Suspendiermitteln (Suspensionsstabilisatoren) und polymerisiert bei erhöhter Temperatur in Gegenwart von mindestens einem radikalisch zerfallenden im Monomeren beziehungsweise in der Monomeren-Mischung löslichen Katalysator. Die Suspendiermittel sind vorwiegend makromolekulare organische Stoffe, die als Schutzkolloide wirken und einen wichtigen Bestandteil des Verfahrens bilden. Schon geringe Unterschiede bezüglich der Art und Menge des Suspendiermittels bzw. des Suspendiermittelgemisches können entscheidende Veränderungen der anwendungstechnischen Eigenschaften des Polyvinylchlorids, beispielsweise Korngröße, Korngrößenverteilung, Schüttdichte, Farbe, Porosität des Kornes, zur Folge haben. Ferner ist es von Wichtigkeit, aus dem Polymeren meistens durch thermoplastische Verarbeitung Halbzeuge oder Endprodukte herstellen zu können, die sich durch gute Transparenz, möglichst geringe Eigenfarbe und wenig Fischaugen (Stippen) auszeichnen. Sofern es sich um Pfropfpolymerisate handelt, bei denen Vinylchlorid auf ein die Schlagzähigkeit verbesserndes Pfropfreis polymerisiert wird, soll das erzeugte Polymere bei möglichst geringem Gehalt an Pfropfreis mit gutem Ausstoß zu Halbzeugen und Fertigartikeln verarbeitbar sein, die sich durch gute Oberflächenbeschaffenheit und Schlagzähigkeit auszeichnen.

Der Verarbeiter von Vinylchlorid-Polymerisaten fordert ferner hohe Schüttdichten, leichte Plastifizierbarkeit und für die Verarbeitung zusammen mit Weichmacher gute Weichmacheraufnahme, beispielsweise charakterisiert durch die Warmmischbarkeit des Polymeren mit Weichmacher, um möglichst störungsfrei produzieren zu können und seine Verarbeitungsmaschinen wirtschaftlich optimal auszulasten. Es ist außerdem für den Hersteller wichtig, ein Polymerisat zu erzeugen, das gut von restlichen, nicht umgesetzten Monomeren, insbesondere Vinylchlorid, befreit werden kann, ohne daß thermische Schädigung des Produktes auftritt. Letztere Eigenschaft wird unter anderem durch die Porosität des Polymerkorns begünstigt, die in der Regel auch eine verbesserte Warmmischbarkeit mit Weichmachern gewährleistet. Ein kompaktes Polymerkorn, häufig auch als "glasartiges Korn" bezeichnet, ist für die meisten Anwendungsgebiete wenig erwünscht, weil dadurch das Produkt schwerer plastifizierbar ist und zur vermehrten Bildung von Fischaugen (Stippen) neigt, insbesondere, wenn der Anteil an größeren Polymerkörnern, beispielsweise solchen mit einer mittleren Teilchengröße von über 200 µm, vergleichsweise hoch ist.

Aufgabe der vorliegenden Erfindung ist es, ein Polymerisat zu erzeugen mit einer wohlabgestimmten Eigenschaftskombination von hoher Schüttdichte, guter Warmmischbarkeit mit Weichmachern, guter Farbe nach Verarbeitung, leichter Entfernbarkeit von restlichem Vinylchlorid und einer günstigen Korngrößenverteilung.

Es ist ferner Aufgabe der Erfindung, Pfropfpolymerisate bereitzustellen, die bei einem möglichst hohen Gehalt an polymerisiertem Vinylchlorid mit gutem Ausstoß zu Halbzeugen und Fertigartikeln verarbeitbar sind, welche gute Oberflächen-Beschaffenheit und gute Schlagzähigkeit aufweisen.

Es ist aus DE-AS 21 53 727 bekannt, Vinylchlorid-Polymerisate mit verbesserter Porosität, guter Wärmestabilität und Verarbeitbarkeit, insbesondere Trockenmischbarkeit mit Weichmachern, sowie günstigen Verarbeitungseigenschaften dadurch herzustellen, daß Vinylchlorid in wäßriger Suspension mit üblichen Katalysatoren in Gegenwart einer Suspendiermittelmischung von bestimmten Mengen zweier verschiedener Celluloseether (Hydroxyethyl- und Hydroxypropylmethyl-cellulose) polymerisiert wird.

In neuerer Zeit wurde aus US-PS 4,110,527 bekannt, daß man bezüglich Korngrößenverteilung, Schüttdichte, Mischbarkeit und Weichmacherabsorption verbesserte Vinylchloridpolymerisate dadurch herstellen kann, daß man die Suspensionspolymerisation des Vinylchlorids in wäßriger Phase in Gegenwart geringer Mengen gasförmigen Sauerstoffs oder Stickstoffs durchführt. Hierzu soll eine Vielzahl von Suspendiermitteln geeignet sein. Beispielhaft sind Methoxycellulose, Hydroxyethylcellulose, Methoxyhydroxypropyl-cellulose, das Natriumsalz der Carboxymethylcellulose, Magnesiumcarbonat und Calciumphosphat genannt. Bei den erfindungsgemäßen Beispielen wird die Polymerisation in Gegenwart einer Hydroxypropylmethylcellulose und Sorbitanmonostearat vorgenommen.

Es sind ferner aus DE-OS 21 63 194 Gemische bekannt, die gekennzeichnet sind durch innige Mischung eines Polymeren des Vinylchlorids mit Kautschuk enthaltenden Interpolymerteilchen, welche ein vernetztes Acrylkautschuk-Emulsionspolymeres mit einer Glasübergangstemperatur von weniger als etwa 25 °C und ein die Masse des vernetzten Acrylkautschuk-Emulsionspolymeren umgebendes und/oder homogen in dieser Masse dispergiertes Vinylchlorid-Suspensions-Polymeres umfassen. Wie die Beispiele zeigen, werden die Gemische durch Polymerisation von Vinylchlorid in wäßriger Suspension in Gegenwart einer wäßrigen Emulsion eines Acrylkautschuk-Polymeren hergestellt, wobei wahrscheinlich eine Pfropfung von Vinylchloridpolymeren auf das Acrylkautschuk-Polymere eintritt. Diese Suspensionspolymerisation wird bevorzugt durchgeführt in Gegenwart von Hydroxypropylmethylcellulose, deren 2 gew.-%ige wäßrige Lösung bei 20 °C eine Viskosität von mindestens 3, vorzugsweise 15 Pa·s aufweist.

Wie nachfolgend beschriebene Vergleichsversuche beweisen, gelingt es nach den bekannten Verfahren nicht, ein Polymeres mit der günstigen Eigenschaftskombination zu erzielen wie nach dem erfindungsgemäßen Verfahren.

Das neue Verfahren zur Herstellung von Homo-, Co- oder Pfropfpolymerisaten, die 70 bis etwa 100 Gew.-% polymerisierte Vinylchlorid-Einheiten enthalten, durch Suspensionspolymerisation von Vinylchlorid in wäßriger Phase bei Temperaturen von 35 bis 90 °C unter erhöhtem Druck in Gegenwart geringer Mengen gasförmigen Sauerstoffs, mindestens eines radikalisch zerfallenden, im Monomeren löslichen Katalysators, mehrerer Suspendiermittel sowie gegebenenfalls in Gegenwart von Monomeren, die mit Vinylchlorid copolymerisierbar sind, und/oder Polymeren, die mit Vinylchlorid pfropfpolymerisierbar sind, und weiteren Polymerisationshilfsstoffen, ist dadurch gekennzeichnet, daß in Gegenwart von 0,03 bis 3 Gew.-%, bezogen auf eingesetzte(s) Monomere(s), einer Mischung von mindestens drei wasserlöslichen Suspendiermitteln polymerisiert wird, die sich in ihrer dynamischen Grenzflächenspannung, gemessen nach Traube im System Vinylchlorid/Wasser bei 25 °C, Tropfenbildungszeiten von 3 bis 10 s und einer Konzentration von 0,04 Gew.-%, bezogen auf das Wasser, wie folgt unterscheiden:

Suspendiermittel A = 1,0 bis 6,0 mN/m
Suspendiermittel B = 6,1 bis 16,0 mN/m
Suspendiermittel C = 16,1 bis 29,0 mN/m.

Nach der Suspensionspolymerisation sowie der üblichen Abtrennung der Hauptmenge der wäßrigen Phase und Trocknung des Polymeren verbleiben geringe Mengen, in der Regel 0,05 bis 1 Gew.-%, bezogen auf das trockene Polymere, von Resten der Verarbeitungshilfsstoffe, beispielsweise der verwendeten Suspendiermittel, Zersetzungsprodukte der Katalysatoren usw. im Polymeren, so daß auch ein Homopolymerisat nicht 100 Gew.-% polymerisierte Vinylchlorid-Einheiten enthält. In diesem Sinne ist die Angabe "etwa 100 Gew.-% polymerisierte Vinylchlorid-Einheiten" zu verstehen.

Das Verhältnis von wäßriger Phase zur Monomeren enthaltenden Phase beträgt zweckmäßig etwa 1,3 bis 5. Es sind auch Phasenverhältnisse über 5 möglich, doch verschlechtern diese die Wirtschaftlichkeit des Verfahrens unnötig.

Die Suspensionspolymerisation wird bei Temperaturen von 35 bis 90 °C durchgeführt. Unter 35 °C wird im allgemeinen bei den üblicherweise verwendeten radikalisch zerfallenden, in Monomeren löslichen Katalysatoren die Reaktionsgeschwindigkeit zu langsam, es werden nur schlechte Raum-Zeit-Ausbeuten erzielt, auch erreicht das Polymerisat, wenn nicht besondere Vorkehrungen wie der Zusatz von Kettenabbruchmitteln getroffen werden, K-Werte, wie sie für die Weiterverarbeitung des Polymeren ungünstig sind. Oberhalb 90 °C erfordert die Polymerisation einen unnötig hohen apparativen Aufwand, da die Drücke hoch werden. Außerdem werden Polymerisate mit zu niedrigem K-Wert erhalten. Vorzugsweise wird bei Temperaturen von 45 bis 75 °C und insbesondere bei 50 bis 67 °C gearbeitet.

Der Druck im Polymerisationsgefäß ist zweckmäßig der Sättigungsdampfdruck des Vinylchlorids beziehungsweise der verwendeten Monomerenmischung bei der angewendeten Polymerisationstemperatur bzw. liegt etwas über dem Sättigungsdampfdruck. Dies gilt für den Beginn der Polymerisation. In der Regel wird bei Drücken von 0,5 bis etwa 1,5 MPa gearbeitet.

Unter "geringen Mengen gasförmigen Sauerstoffs" sind etwa 0,0005 bis etwa 0,03 Gew.-% Sauerstoff, bezogen auf eingesetzte Monomere zu verstehen. Der Sauerstoff kann als solcher zugesetzt werden oder zweckmäßig in Form einer entsprechenden Menge Luft. Im Gegensatz zur Lehre der US-PS 4,110,527 wurde gefunden, daß nur Sauerstoff und nicht etwa gleichermaßen auch Stickstoff wirksam ist. Beim erfindungsgemäßen Verfahren wird vorteilhaft in Gegenwart von 0,001 bis 0,015 Gew.-% gasförmigen Sauerstoffs, bezogen auf eingesetzte Monomere,

0057913

gearbeitet. Es wurde überraschend gefunden, daß in diesem Bereich und insbesondere bei 0,0015 bis 0,007 Gew.-% gasförmigen Sauerstoffs, bezogen auf eingesetzte Monomere, trotz Variation der Korngrößenverteilung über einen breiten Bereich eine besonders hohe Schüttdichte des erzeugten Polymeren erzielt werden kann, wenn die erfindungsgemäße Suspendiermittelkombination eingesetzt wird.

Diese Kombination besteht aus mindestens drei wasserlöslichen Suspendiermitteln. "Wasserlöslich" heißt, daß bei 20 °C mindestens 0,5 Gew.-%, bezogen auf die Lösung des jeweiligen Suspendiermittels, in Wasser löslich sind. Die drei Suspendiermittel unterscheiden sich in ihrer dynamischen Grenzflächenspannung, gemessen nach Traube, im System Vinylchlorid/Wasser bei 25 °C, mit Tropfenbildungszeiten von 3 bis 10 s bei einer Konzentration des jeweiligen Suspendiermittels von 0,04 Gew.-%, bezogen auf das Wasser. Die Meßmethode ist näher beschrieben in I.T.Davies und E.K.Rideal "Interfacial Phenomena" Academic Press/New York, London, 1963, Seiten 172 bis 177.

Das erste Suspendiermittel (A) soll eine Grenzflächenspannung von 1,0 bis 6,0 mN/m aufweisen. Ein Suspendiermittel mit einer Grenzflächenspannung <1,0 mN/m ist für die Polymerisation von Vinylchlorid nicht bekannt. Hat das Suspendiermittel A eine Grenzflächenspannung von über 6,0 mN/m, so werden bei dem gewünschten porösen Korn des Polymeren hohe Schüttdichten, beispielsweise über 550 g/l bei K-Wert 70 nicht erreicht. Es ist nur ein kompaktes sogenanntes "Glaskorn" erzielbar, das Polymere ist nur schwer von nichtumgesetzten Monomeren zu befreien. Vorzugsweise wird ein Suspendiermittel A mit einer Grenzflächenspannung von 3,0 bis 5,0 mN/m verwendet.

Beispiele für geeignete Suspendiermittel A sind Hydroxypropylcellulose und Hydroxybutylcellulose mit hohem
Substitutionsgrad der jeweiligen Hydroxyalkylgruppe.

Das zweite Suspendiermittel (B) soll eine Grenzflächenspannung, gemessen nach der weiter oben beschriebenen
Methode von 6,1 bis 16,0 mN/m besitzen. Hat es eine Grenzflächenspannung <6,1 mN/m, so wird ein Polymeres mit
einer ungünstig breiten Teilchengrößenverteilung und
niedriger Schüttdichte, beispielsweise <520 g/l bei
K-Wert 70, erhalten. Hat das Suspendiermittel B eine
Grenzflächenspannung >16,0 mN/m, so wird ebenfalls niedrige Schüttdichte bei zu breiter Teilchengrößenverteilung beobachtet, vorzugsweise wird ein Suspendiermittel mit einer Grenzflächenspannung von 7 bis 11 mN/m
eingesetzt. Als Suspendiermittel B ist eine größere
Anzahl der für die Herstellung von Polyvinylchlorid
geeigneten wasserlöslichen Suspendiermittel verwendbar. Als Beispiele seien genannt Aminoethylhydroxypropylcellulose, Hydroxypropylcellulose oder Hydroxybutylcellulose mit niedrigem Substitutionsgrad der
jeweiligen Hydroxyalkylgruppe, Methylcellulose, Methylhydroxyethylcellulose, Methylhydroxypropylcellulose,
Methylhydroxybutylcellulose sowie teilverseifte wasserlösliche Polyvinylacetate mit Verseifungszahlen
zwischen 140 und 280.

Das dritte Suspendiermittel (C) soll eine Grenzflächenspannung von 16,1 bis 29,0 mN/m besitzen. Hat es eine
Grenzflächenspannung von <16,1 mN/m, so wird eine zu
niedrige Schüttdichte des erzeugten Polymeren, beispielsweise <500 g/l bei K-Wert 70, festgestellt.
Liegt die Grenflächenspannung bei über 29,0 mN/m,
so hat das eingesetzte Mittel eine zu geringe Suspendierwirkung, sein Zusatz wäre überflüssig. Vorzugsweise soll das Suspendiermittel C eine Grenzflächenspannung von 18,0 bis 23,0 mN/m aufweisen. Auch als Suspendiermittel C kommen eine größe Anzahl für PVC bekannter Suspendiermittel in Frage. Als Beispiele seien genannt Hydroxyethylcellulose, Maleinsäureanhydridmethylvinylether-Copolymere, hydroxypropylierte Guarstärke, Gelatine.

Anstelle jedes der einzelnen genannten Suspendiermittel A, B, C können Mischungen verschiedener Suspendiermittel verwendet werden, sofern deren Grenzflächenspannung im angegebenen Bereich liegt.

Außer der genannten Suspendiermittelkombination können weitere, beispielsweise öllösliche Suspendiermittel zugegeben werden, wie Sorbitanester, z.B. Sorbitanmonolaurat, oder teilverseifte Polyvinylacetate mit einer Verseifungszahl von >300.

Die Gesamtmenge aller eingesetzten Suspendiermittel soll 0,03 bis 3 Gew.-%, bezogen auf eingesetzte Monomere betragen. Unter 0,03 Gew.-% wird im allgemeinen keine ausreichende Suspendierwirkung mehr festgestellt. Oberhalb 3 Gew.-% wird das erzeugte Polymere im allgemeinen zu feinteilig, neigt zum Stauben, auch wird die Polymerisation unnötig teuer und damit unwirtschaftlich. Vorzugsweise wird eine Gesamtmenge der verwendeten Suspendiermittel von 0,04 bis 0,4 Gew.-%, bezogen auf eingesetzte Monomere verwendet.

Gute Ergebnisse werden erhalten, wenn in der Suspendiermittelmischung die Gewichtsteile des eingesetzten Suspendiermittels A zu den Gewichtsteilen des eingesetzten Suspendiermittels C sich verhalten wie 3 : 2 bis 1 : 3. Ist das Verhältnis größer als 3 : 2, wird eine Abnahme des Schüttgewichtes des erzeugten Polymerisates beobachtet, die Porosität des Polymerkorns steigt und wird unnötig hoch. Das so hergestellte Polymere ergibt bei der Extrusion und Spritzguß-Verarbeitung nicht den gewünschten hohen Ausstoß. Liegt das Verhältnis der Gewichtsteile des Suspendiermittels A zu den Gewichtsteilen des Suspendiermittels C unter 1 : 3, erhält man in zunehmendem Maße Polymerisate mit kompaktem Korn (sogenanntem "Glaskorn"), das schlecht von restlichem Monomerem zu befreien ist und bei der Verarbeitung zu Schwierigkeiten führen kann. Besonders bevorzugt wird ein Verhältnis der Gewichtsteile des Suspendiermittels A zu den Gewichtsteilen des Suspendiermittels C von 1 : 1 bis 1 : 2 eingestellt.

Ferner werden gute Ergebnisse erhalten, wenn die Summe der Gewichtsteile der eingesetzten Suspendiermittel A + C zu den eingesetzten Gewichtsteilen des Suspendiermittels B sich verhält wie 5 : 1 bis 1 : 2. Wenn das genannte Verhältnis größer ist als 5 : 1, hat das hergestellte Polymere eine ungünstige Teilchengrößenverteilung mit zu viel groben Anteilen der durchschnittlichen Teilchengröße über 200 µm. Wird das Verhältnis kleiner als 1 : 2, so ist die Teilchengrößenverteilung des Polymeren wiederum nicht optimal, da zu viel feine Anteile vorhanden sind, außerdem wird das erzeugte Polymerkorn in zunehmendem Maße glasig. Besonders bevorzugt ist ein Verhältnis der Summe der Gewichtsteile der Suspendiermittel A + C zu den Gewichtsteilen des Suspendiermittels B von 3 : 1 bis 1 : 1.

Das neue Verfahren eignet sich zur Herstellung von Homo-, Co- oder Pfropfpolymerisaten, die 70 bis etwa 100 Gew.-%, bezogen auf das trockene Polymerisat, polymerisierte Vinylchlorid-Einheiten enthalten, wobei vorzugsweise gute Ergebnisse bei der Herstellung von Co- oder Pfropfpolymerisaten, die 85 bis etwa 99 Gew.-% polymerisierte Vinylchlorid-Einheiten enthalten, erzielt werden. Insbesondere gute

Ergebnisse liefert auch die Homopolymerisation von Vinylchlorid.

Die erfindungsgemäße Herstellung der Vinylchlorid-Homo-, -Co- oder -Pfropfpolymerisate kann nach kontinuierlichem oder Chargen-Polymerisationsverfahren, mit oder ohne Verwendung eines Saat-Vorpolymerisats erfolgen. Es wird dabei in wäßriger Suspension in Gegenwart von 0,001 bis 3 Gew.-%, vorzugsweise 0,01 bis 0,3 Gew.-%, bezogen auf Monomere, radikal-bildender Katalysatoren, wie zum Beispiel Diaryl-, Diacylperoxide, wie Diacetyl-, Acetylbenzoyl-, Di-lauroyl-, Dibenzoyl-, Bis-2,4-dichlorbenzoyl-, Bis-2-methylbenzoyl-peroxid; Dialkylperoxide, wie Di-tert.-butylperoxid, Perester, wie tert.-Butylpercarbonat; tert.-Butylperacetat, tert.-Butylperoctoat, tert.-Butylperpivalat; Dialkylperoxy-dicarbonate, wie Diisopropyl-, Diethylhexyl-, Dicyclohexyl-, Diethylcyclohexylperoxy-dicarbonate; gemischte Anhydride von organischen Sulfopersäuren und organischen Säuren, wie Acetylcyclohexylsulfonylperoxid; als Polymerisationskatalysatoren bekannte Azoverbindungen, wie Azoisobuttersäurenitril, außerdem gegebenenfalls Zusätzen von Persulfaten, wie Kalium-, Natrium- oder Ammoniumpersulfat, Wasserstoffperoxid, tert.-Butylhydroperoxid oder anderen wasserlöslichen Peroxiden sowie Mischungen verschiedener Katalysatoren polymerisiert, wobei peroxidische Katalysatoren auch in Gegenwart von 0,01 bis 1 Gew.-%, bezogen auf Monomere, einer oder mehrerer reduzierender Substanzen, die zum Aufbau eines Redox-Katalysatorsystems geeignet sind, wie zum Beispiel Sulfite, Bisulfite, Dithionite, Thiosulfate, Aldehydsulfoxylate, zum Beispiel Na-Formaldehydsulfoxylat, eingesetzt werden können.

Außerdem kann die Polymerisation in Gegenwart von 0,01 bis 1 Gew.-%, bezogen auf Monomere, von einem oder mehreren nichtionogenen Emulgatoren durchgeführt werden, wobei die Emulgatoren sowohl zur Voremulgierung der Monomeren allein wie auch bei der eigentlichen Polymerisation in Mischung mit den obengenannten Suspendiermitteln, eingesetzt werden können.

Als nichtionogene Emulgatoren sind beispielsweise geeignet: Polyoxyethylenester von Fettsäuren sowie Polypropylenoxid-Polyethylenoxid-Kondensationsprodukte. Neben Katalysatoren, dem erfindungsgemäßen Suspendiermittelgemisch und gegebenenfalls Emulgatoren kann die Polymerisation in Gegenwart von Puffersubstanzen, beispielsweise Alkaliacetate, Borax; Alkalicarbonate, Alkaliphosphate, Ammoniak oder Ammoniumsalzen von Carbonsäuren sowie von Molekülgrößenreglern, wie beispielsweise aliphatische Aldehyde mit 2 bis 4 Kohlenstoffatomen, Chlor- oder Bromkohlenwasserstoffe, wie zum Beispiel Di- und Trichlorethylen, Chloroform, Bromoform, Methylenchlorid sowie Mercaptanen durchgeführt werden. Beispiele weiterer geeigneter Polymerisationshilfsstoffe finden sich in H. Kainer "Polyvinylchlorid und Vinylchlorid-Mischpolymerisate", Auflage 1965, Seiten 13 bis 34.

Zur Copolymerisation mit Vinylchlorid sind beispielsweise eines oder mehrere folgender Monomerer geeignet: Olefine, wie Ethylen oder Propylen, Vinylester von geradkettigen oder verzweigten Carbonsäuren mit 2 bis 20, vorzugsweise 2 bis 4 Kohlenstoffatomen, wie Vinylacetat, -propionat, -butyrat, -2-ethylhexoat, Vinylisotridecansäureester; Vinylhalogenide, wie Vinylfluorid, Vinylidenfluorid, Vinylidenchlorid, Vinylether, Vinylpyridin, ungesättigte Säuren, wie Malein-, Fumar-, Acryl-, Methacrylsäure und deren Mono- oder Diester mit Mono- oder Dialkoholen mit 1 bis 12 Kohlenstoffatomen; Maleinsäureanhydrid; Maleinsäureimid sowie dessen N-Substitutionsprodukte mit aromatischen, cycloaliphatischen sowie gegebenenfalls verzweigten, aliphatischen Substituenten; Acrylnitril, Styrol.

Zur Pfropfpolymerisation können beispielsweise vernetzte oder unvernetzte elastomere Polymerisate verwendet werden, die durch Polymerisation von einem oder mehreren folgender Monomerer erhalten wurden; Diene wie Butadien, Cyclopentadien; Olefine wie Ethylen, Propylen; Styrol, ungesättigte Säuren wie Acryl- oder Methacrylsäure sowie deren Ester mit Mono- oder Dialkoholen mit 1 bis 12 Kohlenstoffatomen, Acrylnitril, Vinylverbindungen wie Vinylester von geradkettigen oder verzweigten Carbonsäuren mit 2 bis 20, vorzugsweise 2 bis 4 Kohlenstoffatomen, Vinylhalogenide wie Vinylidenchlorid und Vinylchlorid. Letzteres jedoch nur mit mindestens einem der zuvor genannten Monomeren.

Vorzugsweise werden zur Pfropfpolymerisation elastomere Polymerisate eingesetzt, die einen Glasumwandlungspunkt von höchstens +20 °C haben, insbesondere solche, die einen Glasumwandlungspunkt von -60 °C bis 0 °C aufweisen. Beispiele für geeignete Polymerisate, in deren Gegenwart Vinylchlorid, gegebenenfalls in Mischung mit einem oder mehreren der vorstehend genannten, für die Copolymerisation mit Vinylchlorid geeigneten Monomeren, polymerisiert wird, sind:
Homo- oder copolymere Acrylsäureester, deren Alkoholkomponente 4 bis 12 C-Atome hat; Ethylen-Propylen-Kautschuk; Ethylen-Propylen-Dien-Kautschuk, der als polymerisiertes Dien beispielsweise Butadien, Cyclopentadien oder Ethyliden-norbornen enthält; Ethylen-Vinylacetat-Copolymerisate; chloriertes Polyethylen mit einem Chlorgehalt von 30 bis 50 Gew.-%; Nitrilkautschuk; Methacrylat-Butadien-Styrol-Polymerisate; Acrylnitil-Butadien-Styrol-Polymerisate.

Besonders gute Ergebnisse werden erhalten, wenn die zu pfropfenden Polymerisate vernetzt sind.

Zweckmäßig wird vor Beginn der Pfropfpolymerisation das zu pfropfende Polymere fein zerkleinert in dem für die Pfropfung zu verwendenden Monomeren oder Monomerengemisch gelöst oder zumindest stark angequollen, oder es wird in Form einer wäßrigen feinteiligen Dispersion vorgelegt.

Die Homo-, Co- oder Pfropfpolymerisation wird gegebenenfalls unter Rückflußkühlung, Verwendung von zwei oder mehreren Rührgeschwindigkeiten und/oder Temperaturstufen ausgeführt. Der pH-Wert der Polymerisationsflotte sollte zwischen 2 und etwa 10 liegen.

Während der Polymerisation können ein oder mehrere folgender Stoffe, gegebenenfalls unter Konstanthaltung des Füllvolumens des Polymerisationsgefäßes, zugegeben werden: Wasser, wäßrige Lösungen, Monomere, Katalysatoren, Cokatalysatoren, weitere Polymerisationshilfsstoffe, wie zum Beispiel Regler, Puffersubstanzen, die obengenannten Emulgatoren oder Suspendiermittel.

Erfindungsgemäß hergestellte Polymerisate können nach bekannten Verfahren sowohl in wäßriger Dispersion, als wasserfeuchter Kuchen oder im pulverförmigen feuchten oder trockenen Zustand von restlichen Monomeren, insbesondere Vinylchlorid, befreit werden.

Die Aufarbeitung der wäßrigen Polymerisat-Dispersion zum trockenen Pulver erfolgt ebenfalls nach bekannten Methoden, beispielsweise durch Dekantieren der Hauptmenge der wäßrigen Phase in einer Dekanter-Zentrifuge und Trocknen des so erhaltenen wasserfeuchten Kuchens in einem Strom- oder Wirbelbett-Trockner. So erhaltene pulverförmige Polymerisate können wie bisher übliche Suspensionspolymerisate des Vinylchlorids, beispielsweise durch Strangpressen, Spritzgießen oder Kalandrieren, thermoplastisch verarbeitet werden.

Durch die günstige Eigenschaftskombination der erfindungsgemäß hergestellten Polymerisate bezüglich hoher Schüttdichte, günstiger Korngrößenverteilung und Verarbeitbarkeit eignen sich die Polymerisate besonders für Verarbeitungsvorgänge, die bei hoher Durchsatzleistung einwandfrei homogen plastifizierte Artikel ergeben. Pfropfpolymerisate mit elastomeren Polymeren können mit hohen Ausstoßleistungen zu Formkörpern mit guter Oberfläche und vergleichsweise guter Schlagzähigkeit verarbeitet werden. Durch die leichte Entfernbarkeit von restlichen Monomeren wird eine wirtschaftlich günstige, physiologisch einwandfreie Produktion der erfindungsgemäßen Polymerisate ermöglicht, wie auch deren physiologisch einwandfreie Weiterverarbeitung und Verwendung der daraus erzeugten Artikel gewährleistet.

Nachfolgende Beispiele sollen die Erfindung näher erläutern. Zum Vergleich mit Verfahren gemäß dem Stande der Technik wurden Vergleichsversuche durchgeführt, die ebenfalls nachfolgend beschrieben werden und zum besseren Vergleich zusammen mit den Ergebnissen der erfindungsgemäßen Beispiele in Tabellen zusammengestellt sind.

Die Meßergebnisse wurden nach folgenden Methoden ermittelt:

1. K-Wert nach DIN 53 726, Lösungsmittel:Cyclohexanon;
2. Schüttdichte nach DIN 53 468;
3. Warmmischbarkeit (sogenannter "dry-blend-test"):
   In einem Planetenmischer der Firma Brabender vom Typ 600 S werden bei 88 °C und 100 Upm 400 g Vinylchlorid-Polymerisat 5 Minuten lang vorgewärmt und dann 200 g Di-ethylhexyl-phthalat zugemischt. Während der Zumischung und eine Zeit danach wird das

Drehmoment des Mischers ständig beobachtet. Je nach der Weichmacheraufnahmefähigkeit des Polymerisates steigt nach Zugabe des Di-ethylhexyl-phthalats das Drehmoment mehr oder weniger schnell an, um danach wieder abzusinken. Der Minimalwert des Drehmoments wird als "Trockenpunkt" bezeichnet. Die Zeit von der Zugabe des Di-ethylhexyl-phthalats bis zum Erreichen des "Trockenpunktes" ist als charakteristische Größe für die Weichmacheraufnahme des Vinylchlorid-Polymerisatpulvers in nachfolgender Tabelle in Minuten und Sekunden aufgeführt.

4. Restvinylchlorid-Gehalt: gaschromatographisch nach der "head-space"-Methode (Zeitschrift für analytische Chemie, 255 (1971), Seiten 345 bis 350) ermittelt.

5. Verfärbungstest:

| | Teile |
|---|---|
| Polymerisat | 100 |
| Di-n-octyl-zinn-bis-thioessigsäure-ethylhexylester | 1,2 |
| Glycerinmonostearat | 0,3 |
| Gleitmittelgemisch, bestehend aus gehärtetem Rizinusöl, Triglycerid und Monoglycerid, erhältlich unter der Bezeichnung Loxiol GH 4 | 0,5 |
| Montansäureester von 1,3-Butandiol | 0,1. |

Die Rezeptbestandteile werden in einem Heizmischer gemischt, bis die Temperatur des Mischgutes auf 110 °C angestiegen ist (ca. 15 Minuten), dann in einen Kühlmischer abgelassen und auf 30 °C abgekühlt (ca. 15 Minuten). Aus dieser Mischung werden in einem Einschnekkenextruder (Schnecke 50 mm Durchmesser, 20 D Länge) durch eine Düse mit 32 mm Durchmesser mit Innendorn von 28 mm Durchmesser zu einem Rohr extrudiert, das in einem Wasserbad abgekühlt und in Abschnitte von 150 mm Länge zerschnitten wird. Die Verarbeitungstemperaturem im Extruder betragen: Einfüllzone 140 °C, Ausstoßzone 160 °C, Kopf mit Ringdüse 180 °C.

Die Rohrabschnitte werden unter einer Tageslichtlampe gegen einen neutral weißen Hintergrund im Vergleich zu einem mit einem Standard-Polymeren auf gleiche Weise hergestellten Rohr durch Betrachten der Schnittflächen visuell nach folgender Notenskala beurteilt:

Note 1: Farbe wie Standard (in der Regel schwach gelblich)
Note 2: leicht verfärbt (gelblich)
Note 3: deutlich verfärbt (gelb)
Note 4: erheblich verfärbt (dunkelgelb)
Note 5: stark verfärbt (braungelb).

Als Standard wird ein nach dem Suspensionsverfahren gemäß Stand der Technik hergestelltes Vinylchlorid-Homopolymerisat vom K-Wert 60 verwendet, wie es nach der Polymerisation ohne besondere Nachentgasungsverfahren anfällt.

6. Korngrößenverteilung nach DIN 53 734.
Es ist jeweils die Menge der Teilchen in Gew.-%, bezogen auf die Gesamtmenge des eingesetzten Polymeren, angegeben.

7. Speziell zur Prüfung von Pfropfpolymerisaten wird eine Test-Extrusion wie folgt durchgeführt:

100   Gew.-Teile Polymeres,
2   Gew.-Teile eines pulverförmigen Ba-Cd-Stabilisators (z.B. Mark® WSX von Fa. Argus, Drogenbos/ Belgien),

0057913

- 18 -

0,5 Gew.-Teile eines Alkylarylphosphit-Stabilisators (z. B. Mark® C von Fa. Argus, Drogenbos/ Belgien),

0,3 Gew.-Teile Oxystearinsäure,

2 Gew.-Teile epoxidiertes Sojabohnenöl (z. B. Edenol® D 81 von Fa. Henkel, Düsseldorf/B.R. Deutschland),

5 Gew.-Teile feinteilige Kreide, und

2 Gew.-Teile Titandioxid vom Rutil-Typ werden in einem Heiz-Kühlmischer zunächst während 15 min bis zum Erreichen einer Temperatur von 120 °C, dann weitere 15 min bis zum Erreichen einer Temperatur von 30 °C intensiv gemischt. Die so erhaltene Mischung wird mit einem Doppelschnecken-Extruder von Fa. Weber, Kronach, B.R. Deutschland, zu Fensterrahmen-Profilen verarbeitet. Der Extruder hat zwei zylindrische Schnecken, von denen jede einen Durchmesser (D) von 85 mm und eine Länge von 17 D aufweist. Während der Extrusion werden gemessen: die maximale Zylindertemperatur des Extruders, der Extruder-Ausstoß, das ist das Gewicht des in einer Stunde erzeugten Fensterrahmen-Profils und die Extruder-Belastung, gekennzeichnet durch die aus 10 Messungen innerhalb einer Stunde während der Profil-Herstellung gemittelte Stromaufnahme des Extruders in kW. An den erzeugten Fensterrahmen-Profilen wird die Oberflächen-Beschaffenheit visuell festgestellt und die Kerb-Schlagzähigkeit bei 23 °C nach der Prüfmethode DIN 53 453 gemessen. Die ermittelten Werte sind in nachfolgender Tabelle III aufgeführt.

Beispiel 1

In einem Polymerisationskessel aus rostfreiem Stahl, der mit Doppelmantel zur Temperierung und einem stufenlos regelbaren Impellerrührer ausgerüstet ist, werden folgende Komponenten vorgelegt:

15 000 Gew.-Teile entmineralisiertes Wasser,

2 Gew.-Teile einer Hydroxypropylcellulose (Suspendiermittel A) mit einem molaren Substitutionsgrad der Hydroxypropylgruppe von 3,5 und einer Viskosität, gemessen in 4 gew.-%iger wäßriger Lösung bei 25 °C von $280 \cdot 10^{-3}$ Pa · s und einer Grenzflächenspannung von 3,6 mN/m bei 10 s Tropfenbildungszeit (0,04 gew.-%ige wäßrige Lösung bei 25 °C),

4 Gew.-Teile einer Methylhydroxypropylcellulose (Suspendiermittel B) mit einem molaren Substitutionsgrad der Methoxygruppe von 1,87 und einem molaren Substitutionsgrad der Hydroxypropylgruppe von 0,2 sowie einer Viskosität von $50 \cdot 10^{-3}$ Pa · s (in 2 gew.-%iger wäßriger Lösung bei 20 °C) und einer Grenzflächenspannung von 8,6 mN/m bei 10 s Tropfenbildungszeit (0,04 gew.-%ige wäßrige Lösung bei 25 °C),

3 Gew.-Teile einer Hydroxyethylcellulose (Suspendiermittel C) mit einem molaren Substitutionsgrad der Hydroxyethylgruppe von 1,65 und einer Viskosität von $18 \cdot 10^{-3}$ Pa · s (2 gew.-%ige wäßrige Lösung bei 20 °C) und einer Grenzflächenspannung von 18,5 mN/m bei 10 s Tropfenbildungszeit (0,04 gew.-%ige wäßrige Lösung bei 25 °C,

4 Gew.-Teile Diisopropylperoxydicarbonat.

Unter Rühren der Flüssigkeit wird die im Kessel enthaltene Luft sorgfältig durch Stickstoff verdrängt und 0,75 Gew.-Teile Luft und anschließend 10 000 Gew.-Teile Vinylchlorid, das sind 0,0017 Gew.-% Sauerstoff, bezogen auf eingesetztes Vinylchlorid zugegeben. Nach weiteren 10 Minuten wird das Gemisch auf 54 °C erwärmt. Es wird bis zu einem Druckabfall auf 0,5 MPa polymerisiert, wobei ein Umsatz von 92 % erreicht wird. Nun wird der Polymerisationskessel auf Atmosphärendruck entspannt und evakuiert. Danach wird gekühlt und zweimal je 1 l der gebildeten Polymerisatdispersion entnommen. 1 l hiervon wird in einen 2-l-Glaskolben gegeben, auf 80 °C erwärmt und unter Konstanthaltung dieser Temperatur unter Rühren bei 0,048 MPa 6 Gew.-%, bezogen auf eingesetzte Dispersion, Wasser innerhalb 60 Minuten verdampft. Die Menge des verdampften Wassers wird durch Kondensation in einer Falle bestimmt. Aus der Suspension werden alle 10 Minuten Proben entnommen, filtriert und in dem 20 Gew.-% Wasser enthaltenden Polymerisat-Kuchen der Restvinylchlorid-Gehalt gaschromatographisch bestimmt.

Der zweite aus dem Polymerisationskessel entnommene Liter Dispersion wird sofort (ohne die oben beschriebene Wärmebehandlung bei 80 °C) filtriert und in dem 20 Gew.-% Wasser enthaltenden Polymerisat-Kuchen der Restvinylchlorid-Gehalt gaschromatographisch bestimmt.

Aus dem Rest des Kesselinhaltes wird der Feststoff über eine Dekantierzentrifuge von der flüssigen wäßrigen Phase getrennt und in einem Stromtrockner auf eine Restfeuchte von <0,3 Gew.-% Wasser, bezogen auf das Polymerisat, getrocknet. An dem so erhaltenen Polyvinylchlorid-Pulver werden die weiteren Ausprüfungen durchgeführt.

Zur besseren Übersicht sind die gemessenen Werte in nachfolgender Tabelle I zusammengefaßt.

## Vergleichsversuch A

Es wird verfahren wie in Beispiel 1, jedoch mit dem Unterschied, daß nach der sorgfältigen Verdrängung der Luft im Polymerisationskessel durch Stickstoff keine Luft in den Polymerisationskessel gegeben wird. Die Polymerisation wird also in Abwesenheit von Sauerstoff durchgeführt. Ermittelte Werte siehe Tabelle I.

## Vergleichsversuch B

Es wird verfahren wie in Beispiel 1, jedoch mit dem Unterschied, daß nach der sorgfältigen Verdrängung der Luft im Polymerisationskessel durch Stickstoff 10 Gew.-Teile Luft in den Polymerisationskessel gegeben werden, dies entspricht 0,023 Gew.-% Sauerstoff, bezogen auf eingesetztes monomeres Vinylchlorid. Ermittelte Werte siehe Tabelle I.

## Vergleichsversuch C

Es wird verfahren wie in Beispiel 1, jedoch mit dem Unterschied, daß die eingesetzte Hydroxypropylcellulose einen molaren Substitutionsgrad der Hydroxypropylgruppe von 2 und eine Viskosität von $220 \cdot 10^{-3}$ Pa $\cdot$ s (4 gew.-%ige wäßrige Lösung bei 20 °C) sowie eine Grenzflächenspannung von 6,8 mN/m aufweist (0,04 gew.-%ige wäßrige Lösung bei 25 °C). In diesem Versuch ist bei der Polymerisation kein Suspendiermittel des Typs A zugegen, sondern zwei Suspendiermittel des Typs B. Ermittelte Werte siehe Tabelle I.

## Beispiel 2

Es wird die gleiche Apparatur verwendet, wie in Beispiel 1 beschrieben, jedoch werden in den Kessel vorgelegt:

15 000 Gew.-Teile entmineralisiertes Wasser,

3 Gew.-Teile einer Hydroxypropylcellulose mit einem Substitutionsgrad von 3,5 Hydroxypropyl-Einheiten pro Glucose-Einheit und einer Viskosität

von 280 · $10^{-3}$ Pa · s (in 2 gew.-%iger wäßriger Lösung bei 20 °C) sowie einer Grenzflächenspannung von 3,6 mN/m bei 10 s Tropfenbildungszeit (0,04 gew.-%ige wäßrige Lösung),

3 Gew.-Teile einer Methylcellulose mit einem molaren Substitutionsgrad der Methoxygruppe von 1,81 und einer Viskosität von 25 · $10^{-3}$ Pa · s (2 gew.-%ige wäßrige Lösung bei 20 °C sowie einer Grenzflächenspannung von 9,1 mN/m bei 10 s Tropfenbildungszeit (0,04 gew.-%ige wäßrige Lösung),

6 Gew.-Teile eines Copolymeren aus Methylvinylether und Maleinsäureanhydrid (1 : 1) mit einer Viskosität von 18 · $10^{-3}$ Pa · s (2 gew.-%ige wäßrige Lösung bei 20 °C) sowie einer Grenzflächenspannung von 22,5 mN/m bei 10 s Tropfenbildungszeit (0,04 gew.-%ige wäßrige Lösung),

4 Gew.-Teile Dilauroylperoxid,

3 Gew.-Teile tert.-Butylperneodecanoat.

Unter Rühren der Flüssigkeit wird die im Kessel enthaltene Luft durch Stickstoff verdrängt und dann 1,5 Gew.-Teile Luft und 10 000 Gew.-Teile Vinylchlorid, das entspricht 0,0035 Gew.-% Sauerstoff, bezogen auf eingesetztes monomeres Vinylchlorid, zugegeben. Nach weiteren 10 Minuten wird das Gemisch auf 66 °C erwärmt. Es wird polymerisiert bis zu einem Druckabfall auf 0,55 MPa, entsprechend etwa 92 % Umsatz. Nun wird weiter verfahren, wie in Beispiel 1 beschrieben. Die ermittelten Werte sind aus der Tabelle I. ersichtlich.

Beispiel 3

Es wird die gleiche Apparatur verwendet, wie in Beispiel 1 beschrieben, jedoch werden in den Kessel vorgelegt:

15 000 Gew.-Teile entmineralisiertes Wasser,

4 Gew.-Teile einer Hydroxypropylcellulose (Suspendiermittel A) mit einem molaren Substitutions-

grad von 3,5 Hydroxypropyl-Einheiten pro Glucose-Einheit und einer Viskosität von 280 · $10^{-3}$ Pa · s (in 2 gew.-%iger wäßriger Lösung bei 20 °C) sowie einer Grenzflächenspannung von 3,6 mN/m bei 10 s Tropfenbildungszeit (0,04 gew.-%ige wäßrige Lösung),

3,5 Gew.-Teile einer Methylhydroxypropylcellulose (Suspendiermittel B) mit einem molaren Substitutionsgrad der Methoxygruppe von 1,30 und einem molaren Substitutionsgrad der Hydroxypropylgruppe von 0,22 sowie einer Viskosität von 35 · $10^{-3}$ Pa · s (in 2 gew.-%iger wäßriger Lösung bei 20 °C) sowie einer Grenzflächenspannung von 9,8 mN/m bei 10 s Tropfenbildungszeit (0,04 gew.-%ige wäßrige Lösung bei 25 °C),

3,5 Gew.-Teile einer Hydroxyethylcellulose (Suspendiermittel C) mit einem molaren Substitutionsgrad der Hydroxyethylgruppe von 1,65 und einer Viskosität von 350 · $10^{-3}$ Pa · s (2 gew.-%ige wäßrige Lösung bei 20 °C) sowie einer Grenzflächenspannung von 17,8 mN/m bei 10 s Tropfenbildungszeit (0,04 gew.-%ige wäßrige Lösung bei 25 °C),

4 Gew.-Teile tert.-Butylperneodecanoat,

3 Gew.-Teile Dilauroylperoxid.

Unter Rühren der Flüssigkeit wird die im Kessel enthaltene Luft durch Stickstoff sorgfältig verdrängt und 0,75 Gew.-Teile Luft und anschließend 8900 Gew.-Teile Vinylchlorid sowie 1100 Gew.-Teile Vinylacetat, das entspricht 0,0017 Gew.-% Sauerstoff, bezogen auf eingesetzte Monomere, zugegeben. Nach weiteren 10 Minuten wird das Gemisch auf 61 °C erwärmt. Es wird polymerisiert bis zu einem Druckabfall auf 0,55 mPa. Sodann wird weiter verfahren, wie in Beispiel 1 beschrieben. Die ermittelten Werte sind aus der Tabelle I ersichtlich.

Vergleichsbeispiel D

Es wird verfahren wie in Beispiel 3, jedoch wird nach der Verdrängung der Luft aus dem Kessel durch Stickstoff keine Luft zugegeben. Es ist also kein Sauerstoff während der Polymerisation zugegen. Ermittelte Werte siehe Tabelle I.


Beispiel 4

Es wird die gleiche Apparatur verwendet, wie in Beispiel 1 beschrieben, jedoch werden in den Kessel vorgelegt:

15 000 Gew.-Teile entmineralisiertes Wasser,

4 Gew.-Teile einer Hydroxypropylcellulose (Suspendiermittel A) mit einem molaren Susbstitutionsgrad der Hydroxypropylgruppe von 3,5 und einer Viskosität von $280 \cdot 10^{-3}$ Pa $\cdot$ s (in 2 gew.-%iger wäßriger Lösung bei 20 °C) sowie einer Grenzflächenspannung von 3,6 mN/m bei 10 s Tropfenbildungszeit (0,04 gew.-%ige wäßrige Lösung bei 25 °C),

3 Gew.-Teile einer Methylhydroxypropylcellulose (Suspendiermittel B) mit einem molaren Substitutionsgrad der Methoxygruppe von 1,30 und einem molaren Substitutionsgrad der Hydroxypropylgruppe von 0,19 sowie einer Viskosität von $95 \cdot 10^{-3}$ Pa $\cdot$ s (in 2 gew.-%iger wäßriger Lösung bei 20 °C) und einer Grenzflächenspannung von 10,1 mN/m bei 10 s Tropfenbildungszeit (0,04 gew.-%ige wäßrige Lösung bei 25 °C),

7 Gew.-Teile einer Hydroxyethylcellulose (Supendiermittel C) mit einem molaren Substitutionsgrad der Hydroxyethylgruppe von 1,65 und einer Viskosität von $350 \cdot 10^{-3}$ Pa $\cdot$ s (in 2 gew.-%iger wäßriger Lösung bei 20 °C) sowie einer Grenzflächenspannung von 17,8 mN/m bei 10 s Tropfenbildungszeit (0,04 gew.-%ige wäßrige Lösung bei 25 °C),

6 Gew.-Teile Cetylperoxydicarbonat.

Unter Rühren wird die im Kessel enthaltene Luft sorgfältig durch Stickstoff verdrängt und 3 Gew.-Teile Luft sowie anschließend 10 000 Gew.-Teile Vinylchlorid, das entspricht 0,007 Gew.-% Sauerstoff, bezogen auf eingesetztes monomeres Vinylchlorid, zugegeben. Anschließend wird, wie in Beispiel 1 beschrieben, weiterverfahren. Die ermittelten Werte sind aus der Tabelle I ersichtlich.

Vergleichsversuch E

Es wird verfahren analog den Angaben in Beispiel 1 der DE-AS 21 53 727, wobei die gleiche Apparatur benützt wird, wie in Beispiel 1 der vorliegenden Anmeldung beschrieben. In den Kessel werden vorgelegt

15 000  Gew.-Teile entmineralisiertes Wasser,

2,4  Gew.-Teile der Methylhydroxypropylcellulose, wie in Beispiel 3 der vorliegenden Anmeldung beschrieben, die ein Molekulargewicht von etwa 21 000 sowie einen Gehalt an Propylenglykolether-Einheiten von etwa 5 Gew.-% und einen Gehalt an Methoxyl-Einheiten von etwa 20 Gew.-% aufweist,

16,3  Gew.-Teile der Hydroxyethylcellulose, wie in den Beispielen 1, 3 und 4 der vorliegenden Anmeldung beschrieben, die ein Molekulargewicht von etwa 300 000 und 1,65 gebundene Äquivalente an Ethylenoxid-Einheiten pro Einheit an Glucoseanhydrid besitzt,

0,63  Gew.-Teile Natriumbicarbonat,

18,5  Gew.-Teile Dilauroylperoxid.

Unter Rühren der Flüssigkeit wird die im Kessel enthaltene Luft sorgfältig durch Stickstoff verdrängt und 8650 Gew.-Teile Vinylchlorid zugegeben. Nach weiteren 10 Minuten wird das Gemisch auf 55 °C erwärmt und unter Rühren bei dieser Temperatur gehalten, bis sich der Reaktionsdruck auf 0,8 MPa vermindert. Nun wird der Polymerisationskessel gekühlt, auf Atmosphärendruck entspannt und weiter verfahren, wie in Beispiel 1 der vorliegenden Anmeldung beschrieben. Die ermittelten Werte sind in nachfolgender Tabelle I aufgeführt.

Vergleichsversuch F

Es wird verfahren analog den Angaben in Beispiel 3 der US-PS 4,110,527. In einem Polymerisationskessel aus rostfreiem Stahl, der mit Doppelmantel zur Temperierung und einem stufenlos regelbaren Impellerrührer ausgerüstet ist, werden folgende Komponenten vorgelegt:

585 l entmineralisiertes Wasser,
310 g Methylhydroxypropylcellulose, wie im Beispiel 3 der vorliegenden Anmeldung beschrieben, diese entspricht Methocel 90 HG 35;
770 g Sorbitanmonostearat,
77 g 2-Ethylhexylperoxydicarbonat.

Der Kessel wird geschlossen und unter Rühren der Flüssigkeit auf ein Vakuum von 120 mm Quecksilbersäule (entsprechend 16 kPa) Druck evakuiert. Nun werden 307 kg Vinylchlorid zugegeben, nach weiteren 10 Minuten Rühren wird das Gemisch auf 52 °C erwärmt und bei dieser Temperatur 13 Stunden lang polymerisiert, dann abgekühlt, auf Atmosphärendruck entspannt und weiterbehandelt, wie im Beispiel 1 der vorliegenden Anmeldung beschrieben. Vor der Vinylchloridzugabe enthält der Polymerisationskessel einen Gasraum von 430 l Inhalt. Neben Stickstoff und weiteren Bestandteilen der atmosphärischen Luft sind im Polymerisationskessel 18,8 g Sauerstoff vorhanden, das sind 0,0061 Gew.-% Sauerstoff, bezogen auf eingesetztes monomeres Vinylchlorid.

Die ermittelten Werte sind in nachfolgender Tabelle I aufgeführt.

# T A B E L L E   I

| | Sauerstoff-Gehalt [Gew.-%] [1] | K-Wert | Schütt-dichte [g/l] | Warm-misch-barkeit | Rest-Vinylchlorid [TPM] [2] | | Verfär-bungs-test | Korngrößenverteilung | | | | | | |
|---|---|---|---|---|---|---|---|---|---|---|---|---|---|---|
| | | | | | vor | nach 30 min | | >250 | >200 | >160 | >125 | >63 | <63 [3] | |
| | | | | | Entgasung | | | | | in Gew.-% | | | | |
| Beispiel 1 | 0,0017 | 70,0 | 592 | 5' 50" | 6500 | 0,3 | 1 - 2 | 0 | 2 | 14 | 39 | 44 | 1 | |
| Beispiel 2 | 0,0035 | 60,8 | 655 | [4] | 5900 | 0,9 | 2 | 1 | 7 | 25 | 38 | 28 | 1 | |
| Beispiel 3 | 0,0017 | 59,5 | 600 | [4] | 8700 | 1,5 | 2 - 3 | 2 | 5 | 21 | 38 | 34 | 0 | |
| Beispiel 4 | 0,007 | 70,4 | 583 | 6' 10" | 6800 | 0,2 | 1 | 2 | 4 | 18 | 47 | 29 | 0 | |
| Vergleichs-versuch A | 0 | 70,0 | 569 | 5' 30" | 5100 | 0,9 | 2 | 14 | 14 | 32 | 31 | 9 | 0 | |
| Vergleichs-versuch B | 0,023 | 69,9 | 540 | 7' 30" | 7300 | 2,5 | 3 - 4 | 1 | 12 | 18 | 29 | 35 | 5 | |
| Vergleichs-versuch C | 0,0017 | 69,7 | 534 | 5' 40" | 6400 | 0,3 | 1 - 2 | 0 | 3 | 16 | 34 | 44 | 2 | |
| Vergleichs-versuch D | 0 | 59,8 | 690 | [4] | 9700 | 95 | 5 | 63 | 21 | 9 | 6 | 1 | 0 | |
| Vergleichs-versuch E | 0 | 71,0 | 580 | 10' 20" | 11 200 | 22 | 3 - 4 | 76 [5] | 0 | 0 | 2 | 10 | 12 | |
| Vergleichs-versuch F | 0,0061 | 71,8 | 435 | 8' 40" | 8800 | 3,7 | 2 | 0 | 1 | 5 | 33 | 58 | 4 | |

[1] bezogen auf eingesetzte(s) Monomere(s)

[2] Teile je 1 Million Teile trockenes Polymerisat

[3] Zahlenangaben bedeuten µm

[4] nicht gemessen, da für diese K-Werte nicht relevant

[5] neben den 76 % >250 µm wurde noch Brockenbildung sowie ein starker Wandbelag am Polymerisationsgefäß festgestellt.

- 27 -

Beispiel 5

In einem Polymerisationskessel aus rostfreiem Stahl, der mit Doppelmantel zur Temperierung und einem stufenlos regelbaren Impellerrührer ausgerüstet ist, werden folgende Komponenten vorgelegt:

15 000 Gew.-Teile entmineralisiertes Wasser,

4,5 Gew.-Teile einer Hydroxypropylcellulose (Suspendiermittel A) mit einem molaren Substitutionsgrad der Hydroxypropylgruppe von 3,5 und einer Viskosität, gemessen in 4 gew.-%iger wäßriger Lösung bei 25 °C von 280 · $10^{-3}$ Pa·s und einer Grenzflächenspannung von 3,6 mN/m bei 10 s Tropfenbildungszeit (0,04 gew.-%ige wäßrige Lösung bei 25 °C);

5,5 Gew.-Teile einer Methylhydroxypropylcellulose (Suspendiermittel B) mit einem molaren Substitutionsgrad der Methoxygruppe von 1,87 und einem molaren Substitutionsgrad der Hydroxypropylgruppe von 0,2 sowie einer Viskosität von 50 · $10^{-3}$ Pa·s (in 2 gew.-%iger wäßriger Lösung bei 20 °C) und einer Grenzflächenspannung von 8,6 mN/m bei 10 s Tropfenbildungszeit (0,04 gew.-%ige wäßrige Lösung bei 25 °C),

6 Gew.-Teile einer Hydroxyethylcellulose (Suspendiermittel C) mit einem molaren Substitutionsgrad der Hydroxyethylgruppe von 1,65 und einer Viskosität von 18 · $10^{-3}$ Pa·s (2 gew.-%ige wäßrige Lösung bei 20 °C) und einer Grenzflächenspannung von 18,5 mN/m bei 10 s Tropfenbildungszeit (0,04 gew.-%ige wäßrige Lösung bei 25 °C,

3 Gew.-Teile Diisopropylperoxydicarbonat,

2 Gew.-Teile t-Butylperpivalat,

1200 Gew.-Teile einer 50 gew.-%igen Dispersion von vernetztem Copolymerisat aus Polybutylacrylat und 2-Ethylhexylacrylat (80 Teile Butylacrylat + 18 Teile 2-Ethylhexylacrylat + 2 Teile 1,4-Butandioldiacrylat) in Wasser.

0057913

Unter Rühren der Flüssigkeit wird die im Kessel enthaltene Luft sorgfältig durch Stickstoff verdrängt und 0,75 Gew.-Teile Luft und anschließend 10 000 Gew.-Teile Vinylchlorid, das sind 0,0017 Gew.-% Sauerstoff, bezogen auf eingesetztes Vinylchlorid, sowie zur Koagulation des Latex 0,3 Gew.-Teile CaCl$_2$ als wäßrige Lösung zugegeben. Nach weiteren 10 Minuten wird das Gemisch auf 60 °C erwärmt. Es wird bis zu einem Druckabfall auf 0,5 MPa polymerisiert, wobei ein Umsatz von 92 % erreicht wird. Nun wird der Polymerisationskessel auf Atmosphärendruck entspannt und evakuiert. Danach wird gekühlt und zweimal je 1 l der gebildeten Polymerisatdispersion entnommen. 1 l hiervon wird in einen 2-l-Glaskolben gegeben, auf 80 °C erwärmt und unter Konstanthaltung dieser Temperatur unter Rühren bei 0,048 MPa 6 Gew.-%, bezogen auf eingesetzte Dispersion, Wasser innerhalb 60 Minuten verdampft. Die Menge des verdampften Wassers wird durch Kondensation in einer Falle bestimmt. Aus der Suspension werden alle 10 Minuten Proben entnommen, filtriert und in dem 20 Gew.-% Wasser enthaltenden Polymerisat-Kuchen der Restvinylchlorid-Gehalt gaschromatographisch bestimmt.

Der zweite aus dem Polymerisationskessel entnommene Liter Dispersion wird sofort (ohne die oben beschriebene Wärmebehandlung bei 80 °C) filtriert und in dem 20 Gew.-% Wasser enthaltenden Polymerisat-Kuchen der Restvinylchlorid-Gehalt gaschromatographisch bestimmt.

Aus dem Rest des Kesselinhaltes wird der Feststoff über eine Dekantierzentrifuge von der flüssigen wäßrigen Phase getrennt und in einem Stromtrockner auf eine Restfeuchte von <0,3 Gew.-% Wasser, bezogen auf das Polymerisat, getrocknet. An dem so erhaltenen Polyvinylchlorid-Pulver werden die weiteren Ausprüfungen durchgeführt.

Zur besseren Übersicht sind die gemessenen Werte in nachfolgenden Tabellen II und III zusammengefaßt.

## Beispiel 6

In einem Polymerisationskessel aus rostfreiem Stahl, der mit Doppelmantel zur Temperierung und einem stufenlos regelbaren Impellerrührer ausgerüstet ist, werden gegeben:

400 Gew.-Teile eines fein zerkleinerten Ethylen-Propylen-Dien-Polymer-Kautschuks (Buna® 147 der Firma Chemische Werke Hüls/B.R. Deutschland).
Die Luft im Polymerisationskessel wird sorgfältig durch Stickstoff verdrängt, dann werden

10 000 Gew.-Teile Vinylchlorid zugegeben.

Diese Mischung wird 1 h heftig gerührt, dann werden weiter zugegeben:

15 000 Gew.-Teile entmineralisiertes, mit Luft gesättigtes Wasser, das 0,0012 Gew.-%, bezogen auf eingesetztes Vinylchlorid, Sauerstoff enthält,

3 Gew.-Teile einer Hydroxypropylcellulose (Suspendiermittel A) mit einem molaren Substitutionsgrad von 3,5 Hydroxypropyl-Einheiten pro Glucose-Einheit und einer Viskosität von $280 \cdot 10^{-3}$ Pa·s (in 2 gew.-%iger wäßriger Lösung bei 20 °C) sowie einer Grenzflächenspannung von 3,6 mN/m bei 10 s Tropfenbildungszeit (0,04 gew.-%ige Lösung),

3,5 Gew.-Teile einer Methylhydroxypropylcellulose (Suspendiermittel B) mit einem molaren Substitutionsgrad der Methoxygruppe von 1,30 und einem molaren Substitutionsgrad der Hydroxypropylgruppe von 0,22 sowie einer Viskosität von $35 \cdot 10^{-3}$ Pa·s (in 2 gew.-%iger wäßriger Lösung bei 20 °C) sowie einer Grenzflächenspannung von 9,8 mN/m bei 10 s Tropfenbildungszeit (0,04 gew.-%ige wäßrige Lösung bei 25 °C),

3,5 Gew.-Teile einer Hydroxyethylcellulose (Suspendiermittel C) mit einem molaren Substitutions-

grad der Hydroxyethylgruppe von 1,65 und einer Viskosität von $350 \cdot 10^{-3}$ Pa·s (2 gew.-%ige wäßrige Lösung bei 20 °C) sowie einer Grenzflächenspannung von 17,8 mN/m bei 10 s Tropfenbildungszeit (0,04 gew.-%ige wäßrige Lösung bei 25 °C),

4 Gew.-Teile t-Butylperneodecanoat,

3 Gew.-Teile Dilauroylperoxid.

Nach einer Vorrührzeit von 10 min wird auf 60 °C erwärmt. Es wird polymerisiert bis zu einem Druckabfall von 0,55 MPa. Sodann wird weiterverfahren, wie in Beispiel 5 beschrieben. Die ermittelten Werte sind aus den Tabellen II und III ersichtlich.

Beispiel 7

Es wird die gleiche Apparatur verwendet wie in Beispiel 2, jedoch werden in den Polymerisationskessel gegeben:

15 000 Gew.-Teile entmineralisiertes Wasser,

3 Gew.-Teile einer Hydroxypropylcellulose (Suspendiermittel A) mit einem molaren Substitutionsgrad von 3,5 Hydroxypropyl-Einheiten pro Glucose-Einheit und einer Viskosität von $280 \cdot 10^{-3}$ Pa·s (in 2 gew.-%iger wäßriger Lösung bei 20 °C) sowie einer Grenzflächenspannung von 3,6 mN/m bei 10 s Tropfenbildungszeit (0,04 gew.-%ige wäßrige Lösung bei 25 °C),

6 Gew.-Teile einer Methylhydroxypropylcellulose (Suspendiermittel B) mit einem molaren Substitutionsgrad der Methoxygruppe von 1,30 und einem molaren Substitutionsgrad der Hydroxypropylgruppe von 0,22 sowie einer Viskosität von $35 \cdot 10^{-3}$ Pa·s (in 2 gew.-%iger wäßriger Lösung bei 20 °C) sowie einer Grenzflächenspannung von 9,8 mN/m bei 10 s Tropfenbildungszeit (0,04 gew.-%ige wäßrige Lösung bei 25 °C),

6,5 Gew.-Teile einer Hydroxyethylcellulose (Suspendiermittel C) mit einem molaren Substitutionsgrad der Hydroxyethylgruppe von 1,65 und einer Viskosität von $350 \cdot 10^{-3}$ Pa·s (2 gew.-%ige wäßrige Lösung bei 20 °C) sowie einer Grenzflächenspannung von 17,8 mN/m bei 10 s Tropfenbildungszeit (0,04 gew.-%ige wäßrige Lösung bei 25 °C),

3,5 Gew.-Teile t-Butylcyclohexylperoxydicarbonat,

2,5 Gew.-Teile Dilauroylperoxid,

750 Gew.-Teile eines vernetzten Butylacrylatkautschuks mit Polymethylmethacrylat-Außenschale (Paraloid® KM 323 B, Hersteller: Rohm & Haas).

Unter Rühren des Inhalts wird die im Kessel enthaltene Luft durch Stickstoff sorgfältig verdrängt und 1,5 Gew.-Teile Luft und anschließend 10 000 Gew.-Teile Vinylchlorid, das sind 0,0034 Gew.-% Sauerstoff, bezogen auf das eingesetzte Monomere, zugegeben. Nach weiteren 10 min wird auf 60 °C erwärmt. Es wird polymerisiert bis zu einem Druckabfall von 0,3 MPa. Sodann wird weiterverfahren, wie in Beispiel 5 beschrieben. Die ermittelten Werte sind aus den Tabellen II und III ersichtlich.

Vergleichsversuch G

Es wird verfahren wie in Beispiel 6, jedoch wird $O_2$-freies, entmineralisiertes Wasser eingesetzt. Es ist also kein Sauerstoff während der Polymerisation zugegen. Ermittelte Werte siehe Tabellen II und III.

Vergleichsversuch H

Es wird verfahren wie in Beispiel 5, jedoch mit dem Unterschied, daß die eingesetzte Hydroxypropylcellulose einen molaren Substitutionsgrad der Hydroxypropylgruppe von 2 und eine Viskosität von $220 \cdot 10^{-3}$ Pa·s (4 gew.-%ige wäßrige Lösung bei 20 °C) sowie eine Grenzflächenspannung von 6,8 mN/m aufweist (0,04 gew.-%ige wäßrige Lösung bei 25 °C). In diesem Versuch ist bei der Polymerisation kein Suspendiermittel des Typs A zugegen, sondern zwei Suspendiermittel des Typs B. Ermittelte Werte siehe Tabellen II und III.

Vergleichsversuch I

Es wird verfahren analog den Angaben in Beispiel 3, Teil 2 der DE-OS 21 63 194. In einen Polymerisationskessel aus rostfreiem Stahl, der mit Doppelmantel zur Temperierung und einem stufenlos regelbaren Impellerrührer ausgestattet ist, werden folgende Komponenten gegeben:

16 000 Gew.-Teile entmineralisiertes Wasser,

26 Gew.-Teile einer Methylhydroxypropylcellulose mit einer Viskosität von 15 Pa·s (in 2 gew.-%iger wäßriger Lösung bei 20 °C), einem molaren Substitutionsgrad der Methoxygruppe von 1,30 und einem molaren Substitutionsgrad der Hydroxypropylgruppe von 0,19,

1 200 Gew.-Teile eines Latex, der 50 Gew.-%, bezogen auf den Latex, eines vernetzten 98 : 2 Butylacrylat : 1,4 Butandioldimethacrylat- (= 98 : 2 n-Butylacrylat : 1,4-Butylendimethacrylat)-Polymeren enthält,

8 Gew.-Teile Azoisobuttersäurenitril.

Nach sorgfältiger Verdrängung der im Polymerisationskessel enthaltenen Luft werden 10 000 Gew.-Teile Vinylchlorid zugegeben. Der Reaktorinhalt wird unter kräftigem Rühren auf 60 °C erhitzt und dort bis zu einem Druckabfall von 0,25 MPa polymerisiert. Es wird sodann wie in Beispiel 5 weiterverfahren. Ermittelte Werte siehe Tabellen II und III.

## T A B E L L E   II   (Pfropfpolymerisate*)

| | $O_2$-Gehalt (%) | Schütt-gewicht (g/l) | Rest-Vinylchlorid vor | nach 30 min Entgasung | Korngrößenverteilung >250 | >200 | >160 | >125 | >63 | <63 |
|---|---|---|---|---|---|---|---|---|---|---|
| Beispiel 5 | 0,0017 | 585 | 9700 | 2 - 3 | 0 | 0 | 2 | 63 | 33 | 2 |
| Beispiel 6 | 0,0012 | 615 | 7300 | 1 | 2 | 8 | 25 | 38 | 27 | 0 |
| Beispiel 7 | 0,0034 | 600 | 7800 | 2 | 0 | 2 | 9 | 28 | 59 | 2 |
| Vergleichs-versuch G | - | 523 | 8050 | 10 | 64 | 14 | 11 | 6 | 4 | 1 |
| Vergleichs-versuch H | 0,017 | 535 | 6550 | 1 - 2 | 0 | 1 | 3 | 39 | 56 | 1 |
| Vergleichs-versuch I | - | 675 | 8100 | 150 | 0 | 0 | 0 | 12 | 61 | 27 |

*) Bei diesen Polymerisaten, die durch Pfropfung auf vernetzte Elastomere hergestellt werden, ist eine Angabe des K-Wertes und der Warmmischbarkeit mit Weichmachern nicht sinnvoll.

# T A B E L L E  III    (Pfropfpolymerisate)

### Extruder-Test

| | Ausstoß (kg/h) | Strom-aufnahme (kW) | max. Zylindertemp. (°C) | erzeugte Profile | |
|---|---|---|---|---|---|
| | | | | Oberflächen-qualität | Schlagzähig-keit (kJ/m²) |
| Beispiel 5 | 114 | 15 | 175 | gut | 37 |
| Beispiel 6 | 118 | 17 | 175 | gut | 42 |
| Beispiel 7 | 117 | 17 | 175 | gut | 31 |
| Vergleichs-versuch G | 92 | 18 | 175 | streifig | 26 |
| Vergleichs-versuch H | 87 | 14 | 175 | gut | 33 |
| Vergleichs-versuch I | 108 | 21 | 175 | teilweise nicht geschlossene Oberfläche | 14 |

## Patentansprüche

1. Verfahren zur Herstellung von Homo-, Co- oder Pfropfpolymerisaten, die 70 bis etwa 100 Gew.-% polymerisierte Vinylchlorid-Einheiten enthalten, durch Sus-pensionspolymerisation von Vinylchlorid in wäßri-ger Phase bei Temperaturen von 35 bis 90 °C unter erhöhtem Druck in Gegenwart geringer Mengen gasförmigen Sauerstoffs, mindestens eines radikalisch zerfallenden, im Monomeren löslichen Katalysators, mehrerer Suspendiermittel sowie gegebenenfalls in Gegenwart von Monomeren, die mit Vinylchlorid copolymerisierbar sind, und/oder Polymeren, die mit Vinylchlorid pfropfpolymerisierbar sind, und weiteren Polymerisationshilfsstoffen, dadurch gekennzeichnet, daß in Gegenwart von 0,03 bis 3 Gew.-%, bezogen auf eingesetzte(s) Monomere(s), einer Mischung von mindestens drei wasserlöslichen Suspendiermitteln polymerisiert wird, die sich in ihrer dynamischen Grenzflächenspannung, gemessen nach Traube im System Vinylchlorid/Wasser bei 25 °C, Tropfenbildungszeiten von 3 bis 10 s und einer Konzentration von 0,04 Gew.-%, bezogen auf das Wasser, wie folgt unterscheiden:
Suspendiermittel A =  1,0 bis  6,0 mN/m
Suspendiermittel B =  6,1 bis 16,0 mN/m
Suspendiermittel C = 16,1 bis 29,0 mN/m.

2. Verfahren nach Anspruch 1, dadurch gekennzeichnet, daß die Gewichtsteile des eingesetzten Suspendiermittels A zu den Gewichtsteilen des eingesetzten Suspendiermittels C sich verhalten wie 3 : 2 bis 1 : 3 und daß die Summe der Gewichtsteile der eingesetzten Suspendiermittel A + C zu den eingesetzten Gewichtsteilen des Suspendiermittels B sich verhält wie 5 : 1 bis 1 : 2.

3. Verfahren nach einem der Ansprüche 1 oder 2, dadurch gekennzeichnet, daß in Gegenwart von 0,001 bis 0,015 Gew.-%, bezogen auf eingesetzte(s) Monomere(s) gasförmigem Sauerstoff polymerisiert wird.

4. Verfahren nach einem der Ansprüche 1, 2 oder 3, dadurch gekennzeichnet, daß ein Polymeres, welches mit Vinylchlorid pfropfpolymerisierbar ist, verwendet wird, das einen Glasumwandlungspunkt von -60 °C bis 0 °C aufweist.

5. Verfahren nach Anspruch 4, dadurch gekennzeichnet, daß das mit Vinylchlorid pfropfpolymerisierbare Polymere vernetzt ist.